# EUROPEAN PATENT APPLICATION

(11) **EP 0 952 538 A2**
(43) Date of publication of application: **27.10.1999**
(21) Application number: 99301896.9
(22) Date of filing: 12.03.1999
(51) Int. Cl.: G06F 17/60

(54) **System and method for locating users accessing a computer application**

(30) Priority: 12.03.1998 US 41824
(71) Applicant: SUN MICROSYSTEMS, INC., Mountain View, CA 94043 (US)
(72) Inventor: Rautmann, Scott, San Carlo, California 94070 (US); Austin, Calvin J., Santa Clara, California 95054 (US); Squier, Anthony C., Redwood City, CA 94062 (US); Chamness, Mark, Sunnyvale, CA 94086 (US)
(74) Representative: Browne, Robin Forsythe, Dr.

(57) **Abstract**

The present invention provides a system and method for locating users utilizing an application in a computer network environment, such as the Internet. In an embodiment of the present invention, a session manager is utilized in a Web server which keeps track of how many users are logged on at a given time and where each user is located within the application. A user locator is utilized in conjunction with the session manager to communicate with the session manager and receive information related to the location of each user in the application.

## Description

### FIELD OF THE INVENTION

The present invention relates to providing data in a computer network environment. More particularly, it relates to providing data regarding users who are accessing an application on a computer network, such as the Internet.

### BACKGROUND OF THE INVENTION

Computer networks such as the Internet, intranets, local area networks and extranets allow simultaneous access for numerous users from numerous locations to the same application. When a user visits an application, such as a Web site, the user typically cannot tell whether other users are also visiting the same application or what portion of the application the other users are currently accessing. The user also typically lacks a means to communicate with these other users.

For example, a business owner may have created, or have commissioned the creation of, a Web site related to the business. When the owner visits this Web site, the owner may wish to know details regarding the popularity of the Web site, such as how many people are currently visiting this Web site, and what part of the site seems to be most popular or interesting to the visitors. The owner will typically only have access to a counter which counts the total number of visitors to the Web site. Although the owner may be able to access information regarding the total number of users who have visited the service in the past, the owner typically does not have access to current information related to the users.

What is needed is a system and method for providing users information of how many other users are currently utilizing the application. It would also be advantageous to provide information regarding which parts of the applications these users are currently visiting. The present invention addresses such a need.

### SUMMARY OF THE INVENTION

The present invention provides a system and method for locating users utilizing an application in a computer network environment, such as the Internet. In an embodiment of the present invention, a session manager is utilized in a Web server which keeps track of how many users are logged on at a given time and where each user is located within the application. A user locator is utilized in conjunction with the session manager to communicate with the session manager and receive information related to the location of each user in the application.

A method according to an embodiment of the present invention for providing information regarding users accessing a computer application, wherein the computer application includes at least one location, is presented. The method comprising accessing user data, categorizing the user data into the at least one location; and displaying the categorized user data.

In another aspect of the invention, a system according to an embodiment of the present invention for providing information regarding users accessing a computer application, wherein the computer application includes at least one location, is also presented. The system comprising a session manager, wherein the session manager collects user data related to a user accessing the computer application. The system also includes a locator coupled to the session manager, wherein the locator receives the collected user data from the session manager and categorizes the user data into the at least one location. Additionally, the system includes a graphical user interface coupled to the locator, wherein the categorized user data can be displayed.

### BRIEF DESCRIPTION OF THE DRAWINGS

Figure 1 is a block diagram of a computer system suitable for implementing an embodiment of the present invention.
Figure 2 is a block diagram illustrating a system for locating users according to an embodiment of the present invention.
Figures 3 and 4 are flow diagrams of a method according to an embodiment of the present invention for locating users on an application in a network environment.
Figure 5 is an example of a graphical user interface which can be used with the system and method according to an embodiment of the present invention.
Figure 6 is a block diagram of a system of multiple applications which may be utilized according to an embodiment of the present invention.

### DETAILED DESCRIPTION OF THE PREFERRED EMBODIMENTS

The following description is presented to enable one of ordinary skill in the art to make and to use the invention and is provided in the context of a patent application and its requirements. Various modifications to the preferred embodiments will be readily apparent to those skilled in the art and the generic principles herein may be applied to other embodiments. Thus, the present invention is not intended to be limited to the embodiment shown but is to be accorded the widest scope consistent with the principles and features described herein.

The present invention employs various computer-implemented operations involving data stored in computer systems. These operations include, but are not limited to, those requiring physical manipulation of physical quantities. Usually, though not necessarily, these quantities take the form of electrical or magnetic signals capable of being stored, transferred, combined, compared, and otherwise manipulated. The operations described herein that form part of the invention are useful machine operations. The manipulations performed are often referred to in terms, such as, producing, identifying, running, determining, comparing, executing, downloading, or detecting. It is sometimes convenient, principally for reasons of common usage, to refer to these electrical or magnetic signals as bits, values, elements, variables, characters, data, or the like. It should remembered, however, that all of these and similar terms are to be associated with the appropriate physical quantities and are merely convenient labels applied to these quantities.

The present invention also relates to a device, system or apparatus for performing the aforementioned operations. The system may be specially constructed for the required purposes, or it may be a general purpose computer selectively activated or configured by a computer program stored in the computer. The processes presented above are not inherently related to any particular computer or other computing apparatus. In particular, various general purpose computers may be used with programs written in accordance with the teachings herein, or, alternatively, it may be more convenient to construct a more specialized computer system to perform the required operations.

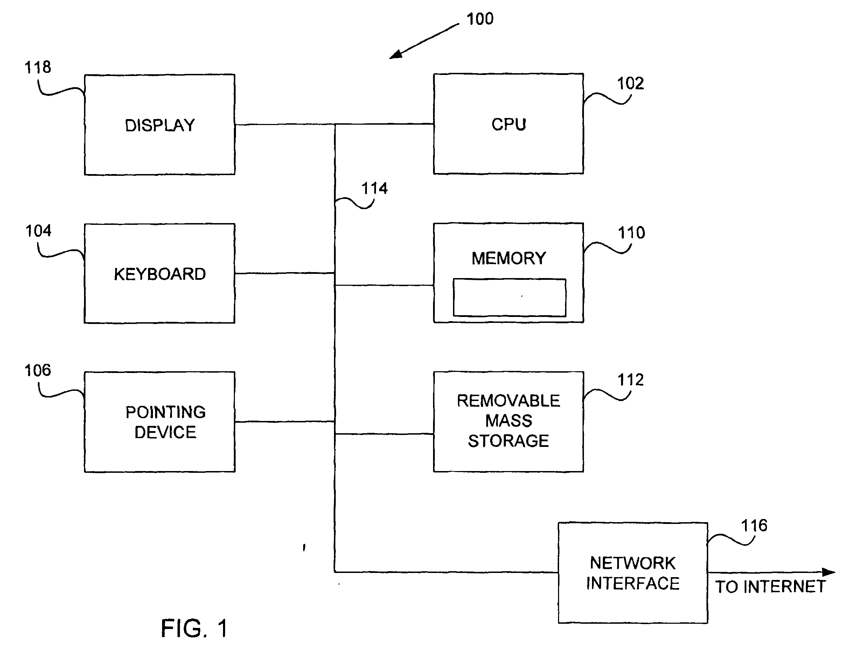

Figure 1 is a block diagram of a general purpose computer system 100 suitable for carrying out the processing in accordance with one embodiment of the present invention. Figure 1 illustrates one embodiment of a general purpose computer system. Other computer system architectures and configurations can be used for carrying out the processing of the present invention. Computer system 100, made up of various subsystems described below, includes at least one microprocessor subsystem (also referred to as a central processing unit, or CPU) 102. That is, CPU 102 can be implemented by a single-chip processor or by multiple processors. CPU 102 is a general purpose digital processor which controls the operation of the computer system 100. Using instructions retrieved from memory 110, the CPU 102 controls the reception and manipulation of input data, and the output and display of data on output devices.

CPU 102 is coupled bi-directionally with memory 110 which can include a first primary storage, typically a random access memory (RAM), and a second primary storage area, typically a read-only memory (ROM). As is well known in the art, primary storage can be used as a general storage area and as scratch-pad memory, and can also be used to store input data and processed data. It can also store programming instructions and data, in the form of data objects and text objects, in addition to other data and instructions for processes operating on CPU 102. Also as well known in the art, primary storage typically includes basic operating instructions, program code, data and objects used by the CPU 102 to perform its functions. Primary storage devices 110 may include any suitable computer-readable storage media, described below, depending on whether, for example, data access needs to be bi-directional or uni-directional. CPU 102 can also directly and very rapidly retrieve and store frequently needed data in a cache memory (not shown).

A removable mass storage device 112 provides additional data storage capacity for the computer system 100, and is coupled either bi-directionally or uni-directionally to CPU 102. For example, a specific removable mass storage device commonly known as a CD-ROM typically passes data uni-directionally to the CPU 102, whereas a floppy disk can pass data bi-directionally to the CPU 102. Storage 112 may also include computer-readable media such as magnetic tape, flash memory, signals embodied on a carrier wave, PC-CARDS, portable mass storage devices, holographic storage devices, and other storage devices. A fixed mass storage (not shown) can also provide additional data storage capacity. The most common example of mass storage is a hard disk drive. Mass storage 112 generally store additional programming instructions, data, and the like that typically are not in active use by the CPU 102. It will be appreciated that the information retained within mass storage 112 may be incorporated, if needed, in standard fashion as part of primary storage 110 (e.g. RAM) as virtual memory.

In addition to providing CPU 102 access to storage subsystems, bus 114 can be used to provide access other subsystems and devices as well. In the described embodiment, these can include a display monitor 118, a network interface 116, a keyboard 104, and a pointing device 106, as well as an auxiliary input/output device interface, a sound card, speakers, and other subsystems as needed. The pointing device 106 may be a mouse, stylus, track ball, or tablet, and is useful for interacting with a graphical user interface.

The network interface 116 allows CPU 102 to be coupled to another computer, computer network, or telecommunications network using a network connection as shown. Through the network interface 116, it is contemplated that the CPU 102 might receive information, *e.g*., data objects or program instructions, from another network, or might output information to another network in the course of performing the above-described method steps. Information, often represented as a sequence of instructions to be executed on a CPU, may be received from and outputted to another network, for example, in the form of a computer data signal embodied in a carrier wave. An interface card or similar device and appropriate software implemented by CPU 102 can be used to connect the computer system 100 to an external network and transfer data according to standard protocols. That is, method embodiments of the present invention may execute solely upon CPU 102, or may be performed across a network such as the Internet, intranet networks, or local area networks, in conjunction with a remote CPU that shares a portion of the processing. Additional mass storage devices (not shown) may also be connected to CPU 102 through network interface 116.

An auxiliary I/O device interface (not shown) can be used in conjunction with computer system 100. The auxiliary I/O device interface can include general and customized interfaces that allow the CPU 102 to send and, more typically, receive data from other devices such as microphones, touch-sensitive displays, transducer card readers, tape readers, voice or handwriting recognizers, biometrics readers, cameras, portable mass storage devices, and other computers.

In addition, embodiments of the present invention farther relate to computer storage products with a computer readable medium that contain program code for performing various computer-implemented operations. The computer-readable medium is any data storage device that can store data which can thereafter be read by a computer system. The media and program code may be those specially designed and constructed for the purposes of the present invention, or they may be of the kind well known to those of ordinary skill in the computer software arts. Examples of computer-readable media include, but are not limited to, all the media mentioned above: magnetic media such as hard disks, floppy disks, and magnetic tape; optical media such as CD-ROM disks; magneto-optical media such as floptical disks; and specially configured hardware devices such as application-specific integrated circuits (ASICs), programmable logic devices (PLDs), and ROM and RAM devices. The computer-readable medium can also be distributed as a data signal embodied in a carrier wave over a network of coupled computer systems so that the computer-readable code is stored and executed in a distributed fashion. Examples of program code include both machine code, as produced, for example, by a compiler, or files containing higher level code that may be executed using an interpreter.

It will be appreciated by those skilled in the art that the above described hardware and software elements are of standard design and construction. Other computer systems suitable for use with the invention may include additional or fewer subsystems. In addition, bus 114 is illustrative of any interconnection scheme serving to link the subsystems. The computer system shown in Fig. 1 is but an example of a computer system suitable for use with the invention. Other computer architectures having different configurations of subsystems may also be utilized.

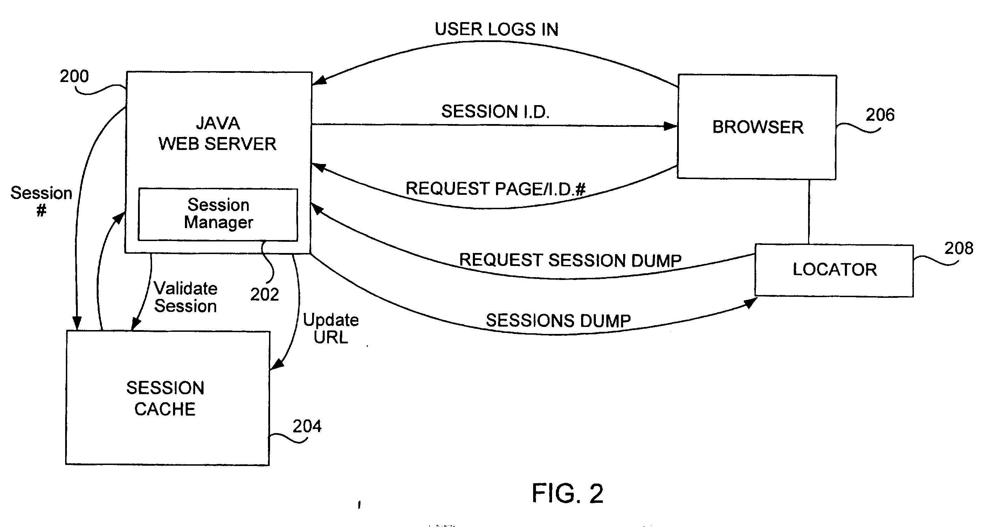

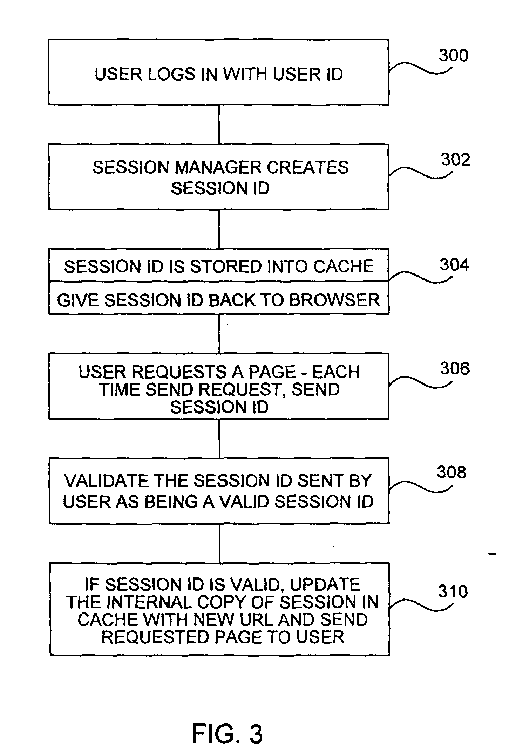

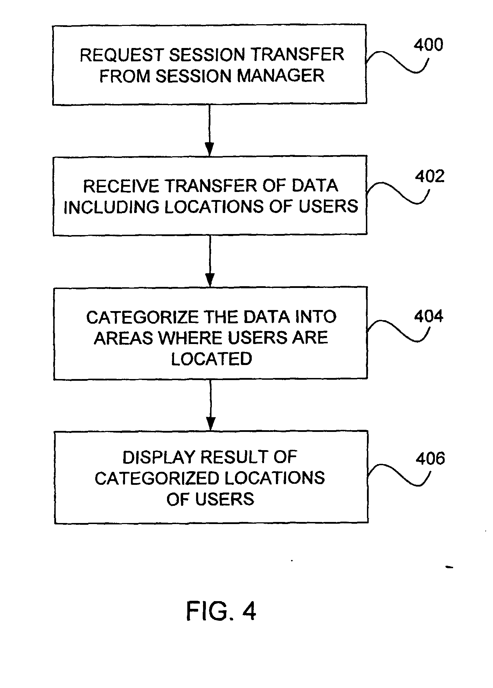

Figure 2 is a block diagram of a system according to an embodiment of the present invention for locating users utilizing an application in a network environment, such as an Internet service. The system shown in Figure 2 shows a Web server 200 coupled with a session cache 204. In the embodiment shown, the Web server 200 takes the form of a Java™ Web server. The Web server 200 is also shown to be coupled to a browser 206 which in turn is coupled to a locator 208. The Web server 200 is shown to include a session manager 202 which keeps track of the locations of users who log onto the Web server 200. Further details of the functions of the system components will be discussed in conjunction with Figures 3 and 4.

The method according to an embodiment of the present invention for locating a user is described in conjunction with Figures 2, 3 and 4. The interactions of the Web server 200, the session manager 202, the session cache 204, and the browser 206 can be understood by referring to examples shown in Figures 2 and 3. A user logs onto the Web server 200 from the browser 206 with a user identification (UID) via step 300. The session manager 202 then creates a session ID via step 302. The session ID is stored in the session cache 204 via step 304. Also, the session ID is sent back to the browser 206 via step 304.

The user requests a page through the browser 206 via step 306. Each time a request is sent from the browser 206, the session ID is also sent along with the request via step 306. The session ID sent by the user is then validated as being a valid session ID via step 308 via the session manager 202 and the session cache 204. If the session ID is valid, the internal copy of the session in the session cache 204 is updated with a new Uniform Resource Locator (URL) and the requested page is sent to the user via step 310.

The interactions of the locator 208 with the session manager 202 and the session cache 204 can be seen by referring to Figures 2 and 4. The locator 208 requests a session transfer from the session manager 202 via step 400. The locator 208 then receives a transfer of data by the session manager 202 via step 402. Examples of a transfer of data can include an identity of a user (user ID number), a session ID number, URL, and a location within the application, such as a Web site. Examples of the format can include the following:
The #:/developer/READABOUTJAVA/index.htm.
The #:/developer/ONLINETRAINING/index.htm.
The "#" can indicate identification such as a user identification. The "developer" is an example of a URL. "READABOUTJAVA" and "ONLINETRAINING" are examples of a location within an Internet service. The "index.htm" is an example of an identification of a web page.

This data can be categorized into areas where the users are located within the application, such as a Web site, via step 404. The result of the categorized locations of the users can then be displayed via step 406.

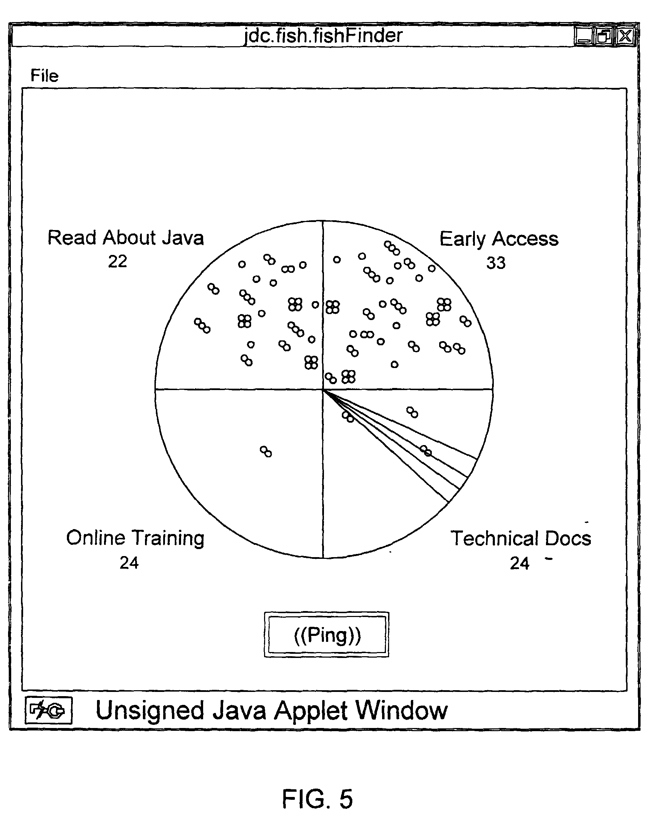

Figure 5 is an example of a graphical user interface by which the result of the categorized locations of the users can be displayed. In this example, the result is displayed in an imitation sonar sweep. The sonar display can be categorized into different locations of an application. The example shown in Figure 5 is segmented into four different locations of the Web site, entitled "READ ABOUT JAVA™", "EARLY ACCESS", "ONLINE TRAINING", and "TECHNICAL DOCS". The total number of users located in each section of the Web site is displayed next to the title of the location. In the example shown in Figure 5, there are currently 22 users accessing the section of the Web site entitled "READ ABOUT JAVA".

Additionally, each section can include a dot for each user who is accessing a particular location within the Web site. These dots can be randomly located within a location or the location of the dots can correspond to various sub-locations within the specific location of the Web site. For example, the dots closest to the center of the sonar sweep can indicate that the user which is represented by that particular dot is at a certain level, for instance a first level, of the location "READ ABOUT JAVA". Also, a dot near the outer edge of the sonar sweep can indicate that the user represented by that particular dot is at a much deeper level, for instance a fifth or sixth sub-level within the location "READ ABOUT JAVA".

Brightness or color of the dots can also convey information, such as how long ago the information was retrieved. For example, in the sonar sweep embodiment, the dots on the sonar screen fade in relation to the sweep arm by displaying an increasingly darker shade of green depending on how far away the sweep arm is from a given dot. For instance, if the sonar screen is viewed as a clock face, and the sweep arm is at 15 minutes, the color of the dots at 14 minutes can be at an intensity of 60-1 = 59^{th} lightest shade of green. The sweep arm can continue to display the data until another request for data is sent by the user. Although a continuous real time data feed can be achieved such that the user can see a display of constant real time data, it is preferred that the data transfer is retrieved when the user indicates a desire for updated information. This desire for updated information can be conveyed by indicating an option, such as clicking on the "PEG" button shown on the example displayed on Figure 5. Having the user indicate when the user wants an updated data transfer avoids a continuous, unnecessary data transfer.

Although the example shown in Figure 5 is a sonar sweep, the graphical display of the data dump results can be in any form which conveys data related to the number of users, the location of the users, or both. For example, a pie chart, a bar graph, a line graph, or a map of the application, such as a Web site or Internet service, can be used in accordance to the present invention.

An additional advantage of the system and method according to an embodiment of the present invention is that a user may contact other users who are using the same application as the user utilizing the locator. As part of the data transfer from the session manager 202 to the locator 208 of Figure 2, information related to contacting the other users in the Web site or service can be included. It may be as simple as a list of Internet addresses of the users who are accessing the Web site or service. The user can then select one of the users in the list to contact.

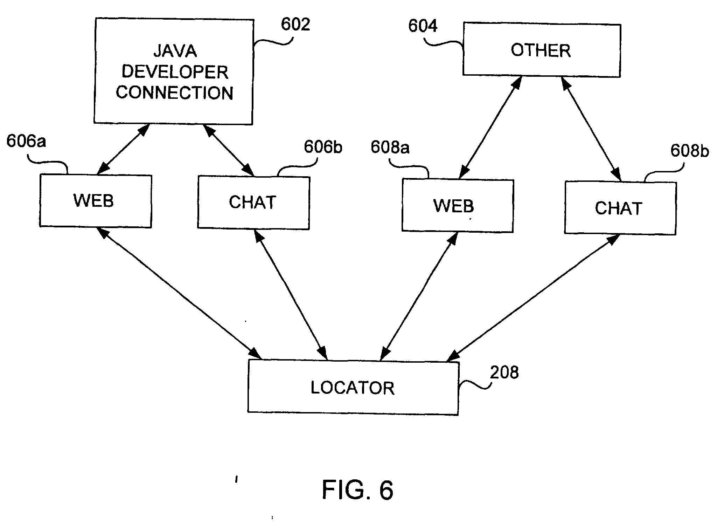

Figure 6 is a block diagram of an example of a system according to an embodiment of the present invention in which the locator 208 works in conjunction with multiple Internet services. In the example shown in Figure 6, URLs, such as Java developer connection 602, and other URLs 604. These URLs are in turn coupled with various Internet services, such as a Web site 606A and 608A, and chat rooms 606B and 608B. The locator 208 can be coupled with various Internet services working in conjunction with various URLs.

A method and system for locating users accessing a computer application have been disclosed. Software written according to the present invention may be stored in some form of computer-readable medium, such as memory or CD-ROM, or transmitted over a network, and executed by a processor.

Although the present invention has been described in accordance with the embodiments shown, one of ordinary skill in the art will readily recognize that there could be variations to the embodiments and these variations would be within the spirit and scope of the present invention. Accordingly, many modifications may be made by one of ordinary skill in the art without departing from the spirit and scope of the appended claims.

## Claims

1. A method for providing information regarding users accessing a computer application, the computer application including at least one location, the method comprising:
accessing user data;
categorizing the user data into the at least one location; and
displaying the categorized user data.

2. The method of claim 1, wherein the user data includes a user identification.

3. The method of claim 2, wherein the user data includes an application location associated with the user identification.

4. The method of any of the preceding claims, wherein the user data includes a Uniform Resource Locator (URL).

5. The method of any of the preceding claims, wherein the user data includes a contact address associated with a user.

6. The method of claim 5, wherein the contact address associated with the user is an electronic network address.

7. The method of claim 5, wherein the contact address associated with the user is an Internet address.

8. The method of any of the preceding claims, further including a step of deriving from the user data a number of users utilizing the computer application.

9. The method of any of the preceding claims, wherein the categorized user data is displayed in a form of a sonar sweep.

10. The method of any of the preceding claims, wherein a total number of users is displayed.

11. The method of any of the preceding claims, wherein a number of users for the at least one location is displayed.

12. The method of any of claims 1-8 and 10-11, wherein the categorized user data is displayed in a form of a map of the computer application.

13. A system for providing information regarding users accessing a computer application, the computer application including at least one location, the system comprising:
means for accessing user data;
means for categorizing the user data into the at least one location; and
means for displaying the categorized user data.

14. A system for providing information regarding users accessing a computer application, the computer application including at least one location, the system comprising:
a session manager, wherein the session manager collects user, data related to a user accessing the computer application;
a locator coupled to the session manager, wherein the locator receives the collected user data from the session manager and categorizes the user data into the at least one location; and
a graphical user interface coupled to the locator, wherein the categorized user data can be displayed.

15. A computer program product for providing information regarding users accessing a computer application, the computer application including at least one location, comprising:
computer code that accesses user data;
computer code that categorizes the user data into the at least one location;
computer code that displays the categorized user data; and
a computer readable medium that stores the computer codes.

16. The computer program product of claim 15, wherein the computer readable medium is selected from the group consisting of CD-ROM, floppy disk, tape, flash memory, system memory, hard drive, and data signal embodied in a carrier wave.

17. A method for providing information regarding users accessing a computer application, the computer application including at least one location, the method comprising:
accessing user data that provides information that is indicative of at least one of users accessing the computer application and a location within the computer application that have been accessed by the at least one user;
categorizing the user data into the at least one location; and
displaying the categorized user data.
